# EUROPÄISCHE PATENTSCHRIFT

(11) **EP 0 816 868 B1**
(45) Veröffentlichungstag und Bekanntmachung des Hinweises auf die Patenterteilung: **09.07.2003**
(21) Anmeldenummer: 97109641.7
(22) Anmeldetag: 13.06.1997
(51) Int. Cl.: G01S 17/93, G01S 7/481

(54) **Lasersender mit schwenkbarem Abtaststrahl**
Laser transmitter with swivelling scanning beam
Emetteur laser avec un faisceau explorateur tournant

(30) Priorität: 01.07.1996 DE 19626298
(43) Veröffentlichungstag der Anmeldung: 07.01.1998
(73) Patentinhaber: Valeo Schalter und Sensoren GmbH, 74321 Bietigheim-Bissingen (DE)
(72) Erfinder: Stumpe, Reinhard, 73765 Neuhausen (DE); Grabmaier, Anton, 74321 Bietigheim-Bissingen (DE)
(74) Vertreter: Dreiss, Fuhlendorf, Steimle & Becker

(56) Entgegenhaltungen:
- EP-A- 0 665 446
- US-A- 4 410 235
- US-A- 4 667 091
- US-A- 5 170 277

## Beschreibung

Die Erfindung betrifft einen Lasersender für ein Kraftfahrzeug mit den Merkmalen des Oberbegriffs des Anspruchs 1.

Um den Fahrer eines Kraftfahrzeugs zu unterstützen, werden die Fahrzeuge mit immer mehr elektrisch arbeitenden Bedienungshilfen versehen. So ist beispielsweise vorgeschlagen worden, das Fahrzeug mit einer mit Laserstrahlen arbeitenden Abstandsmessung zu versehen, durch welches der Abstand von anderen Fahrzeugen ständig gemessen und bei Unterschreitung eines Minimums in die Bedienung des Fahrzeugs eingegriffen wird. Dabei ist insbesondere der Abstand der nachfolgenden Fahrzeuge sowie der vorausfahrenden Fahrzeuge wesentlich. Es ist dabei zu berücksichtigen, dass der Strahlungswinkel eines Lasersenders sehr klein ist, so dass eine ganze Reihe von an der Vorder- oder Hinterfront des Fahrzeugs angeordnete Sender notwendig sind, um bei gegeneinander versetzt fahrenden Fahrzeugen eine Fehlmessung zu vermeiden. Weiterhin werden bei Kurvenfahrt die nachfolgenden und vorausfahrenden Fahrzeuge nicht erfasst, da der Laserstrahl tangential zur Kurve verläuft, während die Fahrzeuge hierzu radial versetzt fahren.

Aus der EP-A-0 665 446 ist ein Laserscanner bekannt geworden, der für ein Kraftfahrzeug zur Abstandsmessung von anderen Fahrzeugen verwendet wird. Der Scanner ist mit einer Laserdiode und einer die Laserstrahlung bündelden Linse versehen.

Aus der US-A-4 667 091 ist ein Lasersender bekannt, dessen Laserstrahl durch eine Verschiebung der Laserdiode quer zur optischen Achse geschwenkt wird.

Aufgabe der Erfindung ist es, mit vergleichsweise einfachen Mitteln den durch einen Lasersender zu überwachenden Raum zu vergrößern.

Die Aufgabe wird mit einem Lasersender gelöst, der die Merkmale des Anspruchs 1 aufweist.

Die Erfindung besteht im Prinzip darin, den Strahlungswinkel des Lasersenders dadurch zu ändern, dass der Laserstrahl dadurch um einen gewissen Winkel verschwenkt wird, dass die Laserdiode gegenüber der Linse aus der optischen Hauptachse oder Mittelachse heraus verschoben wird.

Im Prinzip ist es dabei gleichgültig, ob nun die Linse oder die Laserdiode aus der Achse parallel verschoben wird oder ob etwa beide Bauelemente gleichzeitig gegeneinander verschoben werden.

Für die Verschwenkung selber können die unterschiedlichsten Antriebe eingesetzt werden. Um mit einfachen Mitteln eine hohe Schwenkfrequenz zu erreichen, empfiehlt wird die Laserdiode mittels mindestens einem Biegeelement bewegt, wobei das Biegeelement mit seinem ersten Ende fahrzeugfest eingespannt ist und die Laserdiode mit dem auslenkbaren zweiten Ende des Biegeelements verbunden ist. Damit wird das Biegeverhalten eines Biegeelementes für die Winkelauslenkung des gesendeten Laserstrahls ausgenutzt. Soweit die Eigenschwingungen des Biegeelementes im Bereich der angestrebten Schwenkfrequenz des Laserstrahles liegt, sind derartige Schwingungen mit relativ geringem Kraftaufwand zu erzielen.

Für höhere Auslenkfrequenzen empfiehlt sich in Weiterbildung der Erfindung allerdings die Merkmalskombination nach Anspruch 2, da die Diode sehr viel leichter als die Linse ist und somit sich bei gleichem Schwenkwinkel die aufzuwendenden Kräfte erheblich reduzieren.

Allerdings muss darauf geachtet werden, dass beim Verschwenken der Diode die Brennweite nicht wesentlich geändert wird. Um dies sicherzustellen, empfiehlt sich in Weiterbildung der Erfindung die Merkmalskombination nach Anspruch 3. Es entsteht hierdurch ein Parallelogramm, dessen fahrzeugfeste Grundseite mit der Linse verbunden ist, während die beiden angrenzenden Seiten durch die Biegeelemente gebildet sind. Die freien Enden der Biegeelemente greifen an der Quertraverse an, die in ihrer Längsachse schwingend sich periodisch verschiebt.

Allerdings kann die Quertraverse bei einer entsprechenden schrittweisen Verbiegung der Biegelemente auch schrittweise verschoben werden, wie dies u.a. in Anspruch 4 aufgeführt ist.

Eine besonders einfache Konstruktion ergibt sich, wenn die Merkmale nach Anspruch 5 angewendet werden, da dann durch eine entsprechende Spannungsversorgung für die elektrischen Biegelemente in einfacher Weise deren schwingende oder schrittweise periodische Verbiegung erreicht werden kann.

Da sich der Winkel zwischen Quertraverse und den Enden der Biegeelemente ständig ändert, empfiehlt sich in Weiterbildung der Erfindung die Merkmalskombination nach Anspruch 6. Es wird hierdurch erreicht, dass die Quertraverse selbst nicht auch noch verbogen wird, sondern sich nur im wesentlichen in ihrer Längsrichtung verschiebt.

Die wesentliche Schwenkrichtung wird entsprechend der Merkmalskombination nach Anspruch 7 parallel zur Standebene des Fahrzeugs, also in horizontaler Richtung verlaufen. Es ist aber auch im Bedarfsfälle eine senkrecht hierzu erfolgende Schwingung der Sendediode oder bei doppelter Anwendung des erfindungsgemäßen Prinzips eine Schwenkung in vertikaler und in senkrechter Richtung möglich, wobei diese Bewegungen gleichzeitig oder schrittweise nacheinander erfolgen können.

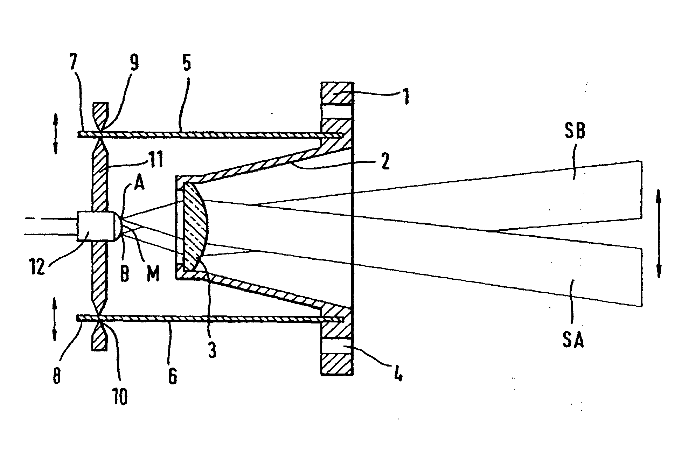

Ein Ausführungsbeispiel der Erfindung wird nachfolgend anhand der Zeichnung erläutert. In der Zeichnung ist ein Grundträger 1 gezeigt, welcher in seiner gedachten Verlängerung die Grundseite eines Parallelogramms bildet. Der Grundträger besitzt eine konische Fassung 2, welche eine Linse gegenüber dem Fahrzeugchassis ortsfest festhält. Der Grundträger besitzt weiterhin Bohrungen zur Befestigung am Fahrzeug selbst. In dem Eintrittsbereich des Konus in den Grundträger, der beispielsweise eine ringförmige Ausgestaltung haben kann, münden zwei Biegeelemente, die dort mit dem Grundträger 1 fest verbunden sind. Die auslenkbaren zweiten Enden 7 und 8 der Biegeelemente 5 und 6 tragen über zwei Spitzenlager 9 und 10 eine Quertraverse 11, die eine Laserdiode 12 aufnimmt.

Die Erfindung arbeitet nun wie folgt: Legt man eine nicht dargestellte Spannung an die aus Piezokeramik gebildeten Biegeelemente 5 und 6 an, so werden sich diese je nach Spannungsrichtung mit ihren Enden 7 und 8 in der Figur entweder nach oben oder nach unten verbiegen. Bei einer entsprechenden sinusförmigen Spannung wird also die Verbiegung dem Spannungswert folgen. Dementsprechend wird auch die Quertraverse 11 in ihrer Längsrichtung verschoben, wodurch eine entsprechende seitliche Versetzung der Laserdiode 12 erfolgt. Dementsprechend wird auch die Hauptachse der von der Laserdiode abgegebenen Strahlung entweder zum Punkt A hin oder zum Punkt B hin versetzt, so daß diese Hauptachse zwischen den Punkten A und B parallel versetzt wird, wenn man annimmt, daß im unausgelenkten Zustand der Biegeelemente 5 und 6 die Hauptachse durch den Punkt M geht. Aus der Versetzung der Hauptachse entweder nach A oder B folgen auch zwei unterschiedlich gerichtete Strahlungskeulen SA und SB, wobei die von diesen Strahlungskeulen umgrenzte Fläche den von der Laserdiode durch die erfindungsgemäße Auslenkung abtastbaren Raum beschreibt.

Die Erfindung läßt sich daher mit anderen Worten kurz wie folgt beschreiben: Für die Abstandsmessung zum vorausfahrenden Verkehr ist es wichtig, daß der gesamte Bereich vor dem eigenen Fahrzeug sicher detektiert wird. Besonders bei der Kurvenfahrt ist ein großer horizontaler Detektionsbereich sehr wichtig. Um außerdem den detektierten Objekten die Fahrspur zuordnen zu können, muß eine räumlich aufgelöste Messung stattfinden. Bei einer optischen Abstandsmessung kann die räumliche Auflösung z.B. durch mehrere getrennte Sendestrahlen erzeugt werden. Dieses Verfahren erfordert jedoch mehrere Sendeelemente (Laserdioden), dies führt zu einem aufwendigen und teuren System. In dieser Anwendung wird eine Möglichkeit vorgeschlagen, mit einem oder zwei Sendeelementen eine gute räumliche Auflösung zu erreichen. Dazu wird der Laserstrahl horizontal abgelenkt und somit der Detektionsbereich abgescannt.

Durch die Stellgröße der Ablenkung ist der Winkel bestimmt. Aus dem Ablenkwinkel und der korrespondierenden Abstandsinformation kann mit Hilfe eines Controllers die räumliche Auflösung erreicht werden.

Wie die Abbildung zeigt, besteht die hier vorgestellte Anordnung aus einer sich bewegenden Laserdiode und einer festen Linse. Da die Linse fest montiert ist, ergibt sich eine einfache Montage des kompletten Sensors für die optische Abstandsmessung. Da die Masse der Linse größer als die der Laserdiode mit Quertraverse ist, ergibt sich ein besseres dynamisches Verhalten bei bewegter Laserdiode. Die Laserdiode wird in einer sogenannten Parallelogrammanordnung geführt. Dies führt dazu, daß bei entsprechender geometrischer Auslegung eine relativ große horizontale Bewegung möglich ist, ohne die Brennweite wesentlich zu verändern. Die gezeichneten Biegeelemente ermöglichen sowohl eine Führung als auch eine Rückstellung der Laserdiode. Das Biegeelement kann als aktives Element oder als passives Element, das fremdgesteuert wird, ausgeführt werden. Eine besonders vorteilhafte Anordnung ergit sich bei der Verwendung von piezoelektrischen Biegeelementen, z.B. als Bimorph, bei denen gleichzeitig die Auslenkung und die Führung der Laserdiode mit Quertraverse erfolgt. Bei der Anordnung als Parallelogramm erfolgt eine gleichphasige Auslenkung, die nicht von der Temperatur beeinflußt wird. Deshalb können bei dieser Anordnung auch Piezokeramiken zur Auslenkung benutzt werden, trotz ihrer starken Temperaturabhängigkeit.

Ferner zeichnet sich diese Anordnung dadurch aus, daß die Auslenkung durch gezielte Verformung eines Biegeelementes stattfindet. Die Führung der Laserdiode mit der Quertraverse erfolgt ohne Gleitreibung und erreicht damit gute dynamische Eigenschaften. Auf einer Seite des Biegeelements erfolgt eine drehbare Lagerung. Ein Ausführungsbeispiel ist, wie in der Zeichnung dargestellt, ein Spitzenlager, das sehr geringe Kräfte benötigt und eine sehr keine Masse besitzt. Besonders sind bei dieser Anordnung die geringen bewegten Massen zu erwähnen, die eine hohe Scanfrequenz mit kleinen Auslenkungskräften erlauben.

Generell läßt sich dieses Verfahren der Ablenkung auch in vertikaler Richtung verwenden.

## Patentansprüche

1. Lasersender für ein Kraftfahrzeug zur Abstandsmessung von anderen Fahrzeugen, wobei der Sender mit einer Laserdiode (12) und einer die Laserstrahlung bündelnden Linse (3) versehen ist, **dadurch gekennzeichnet, dass** die Laserdiode (12) und die Linse (3) im wesentlichen quer zur Strahlungsrichtung der Diode (12) gegeneinander verschiebbar angeordnet sind und die Laserdiode (12) mittels mindestens einem Piezoelektrich arbeitenden Biegeelement (5, 6) bewegt wird, wobei das Biegeelement mit seinem ersten Ende fahrzeugfest eingespannt ist und die Laserdiode (12) mit dem auslenkbaren zweiten Ende (7, 8) des Biegeelements (5, 6) verbunden ist.

2. Lasersender nach Anspruch 1, **dadurch gekennzeichnet, dass** die Linse (3) fahrzeugfest angeordnet und die Laserdiode (12) im wesentlichen quer zur Strahlungsrichtung parallel verschiebbar gelagert ist.

3. Lasersender nach einem der vorangegangenen Ansprüche, **dadurch gekennzeichnet, dass** die Laserdiode (12) mit einer Quertraverse (11) fest verbunden ist, die durch die auslenkbaren zweiten Enden (7, 8) von zwei parallelen Biegeelementen (5, 6) in ihrer Längsrichtung parallel verschiebbar sind, wobei die Diode (12) im wesentlichen senkrecht zur Bewegungsrichtung der Traverse (11) auf die Linse (3) gerichtet angeordnet ist.

4. Lasersender nach Anspruch 3, **dadurch gekennzeichnet, dass** die Quertraverse (11) aus einer Mittellage (M) vorzugsweise schrittweise in die beiden maximalen Auslenklagen (A,B) verschwenkt wird.

5. Lasersender nach einem der Ansprüche 1 bis 4, **dadurch gekennzeichnet, dass** das Piezoelektrich arbeitende Biegelement (5, 6) als Bimorph ausgestaltetes Biegeelement ist.

6. Lasersender nach einem der Ansprüche 3 bis 5, **dadurch gekennzeichnet, dass** die Quertraverse (11) gegenüber den Enden (7,8) der Biegeelemente (5,6) mittels Spitzenlager (9,10) gelagert ist.

7. Lasersender nach einem der vorangegangenen Ansprüche, **dadurch gekennzeichnet, dass** die Diode (12) parallel und/oder senkrecht zur Standebene des Fahrzeugs verschwenkbar ist.

## Claims

1. Laser transmitter for a motor vehicle for measuring the distance from other vehicles, the transmitter being provided with a laser diode (12) and a lens (3) focusing the laser radiation, **characterised in that** the laser diode (12) and the lens (3) are arranged so as to be movable with respect to one another substantially transversely to the radiation direction of the diode (12) and the laser diode (12) is moved by means of at least one piezoelectrically operating flexure element (5, 6), the flexure element being fixed to the vehicle by its first end and the laser diode (12) being connected to the deflectable second end (7, 8) of the flexure element (5, 6).

2. Laser transmitter according to claim 1, **characterised in that** the lens (3) is arranged secured to the vehicle and the laser diode (12) is mounted so as to be displaceable in parallel substantially transversely to the radiation direction.

3. Laser transmitter according to any one of the preceding claims, **characterised in that** the laser diode (12) is rigidly connected to a transverse beam (11) which can be displaced in parallel in its longitudinal direction by the deflectable second ends (7, 8) of two parallel flexure elements (5, 6), the diode (12) being arranged substantially perpendicularly to the movement direction of the transverse beam (11) and directed to the lens (3).

4. Laser transmitter according to claim 3, **characterised in that** the transverse beam (11) is swivelled from a centre position (M) into the two maximum deflection positions (A, B), preferably in steps.

5. Laser transmitter according to any one of claims 1 to 4, **characterised in that** the piezoelectrically operating flexure element (5, 6) is a flexure element designed as a bimorph.

6. Laser transmitter according to any one of claims 3 to 5, **characterised in that** the transverse beam (11) is mounted opposite the ends (7, 8) of the flexure elements (5, 6) by means of toe bearings (9, 10).

7. Laser transmitter according to any one of the preceding claims, **characterised in that** the diode (12) can be pivoted parallel and/or perpendicular to the standing plane of the vehicle.

## Revendications

1. Émetteur laser pour un véhicule automobile destiné à mesurer la distance par rapport à d'autres véhicules, dans lequel l'émetteur est muni d'une diode laser (12) et d'une lentille (3) focalisant le rayonnement du laser, **caractérisé en ce que** la diode laser (12) et la lentille (3) sont disposées de manière mobile l'une par rapport à l'autre sensiblement transversalement à la direction du rayonnement de la diode (12) et le déplacement de la diode laser (12) est effectué au moyen d'au moins un élément de flexion (5, 6) fonctionnant par voie piézoélectrique, l'élément de flexion étant bloqué avec sa première extrémité de manière fixe dans le véhicule et la diode laser (12) étant assemblée à la deuxième extrémité (7, 8), susceptible d'être déviée, de l'élément de flexion (5, 6).

2. Émetteur laser **caractérisé en ce que** la lentille (3) est agencée de manière fixe dans le véhicule et la diode laser (12) est logée de manière mobile parallèlement à celle-ci en se déplaçant sensiblement transversalement à la direction du rayonnement.

3. Émetteur laser selon l'une quelconque des revendications précédentes, **caractérisé en ce que** la diode laser (12) est assemblée de manière fixe avec une traverse (11), qui est mobile parallèlement à sa direction longitudinale par l'intermédiaire des deux extrémités (7, 8), susceptibles d'être déviées, de deux éléments de flexion (5, 6) parallèles, la diode (12) étant orientée vers la lentille (3) sensiblement perpendiculairement à la direction du mouvement de la traverse (11).

4. Émetteur laser selon la revendication 3, **caractérisé en ce que** la traverse (11) se déplace à partir d'une position centrale (M) de préférence progressivement vers les deux positions de déviation (A, B) maximales.

5. Émetteur laser selon l'une quelconque des revendications 1 à 4, **caractérisé en ce que** l'élément de flexion (5, 6) fonctionnant par voie piézoélectrique est un élément de flexion de type bimorphe.

6. Émetteur laser selon l'une quelconque des revendications 3 à 5, **caractérisé en ce que** la traverse (11) est logée au moyen de suspensions à pivot (9, 10) au niveau des extrémités (7, 8) des éléments de flexion (5, 6).

7. Émetteur laser selon l'une quelconque des revendications précédentes, **caractérisé en ce que** la diode (12) est destinée à pivoter parallèlement et/ou perpendiculairement au plan de positionnement du véhicule.
